# EUROPEAN PATENT APPLICATION

(11) **EP 4 614 687 A1**
(43) Date of publication of application: **10.09.2025**
(21) Application number: 23901167.9
(22) Date of filing: 08.12.2023
(51) Int. Cl.: H01M 50/119, H01M 50/184, H01M 50/186, H01M 50/178, H01M 50/105

(54) **POUCH CELL AND METHOD OF MANUFACTURING SAME**

(30) Priority: 09.12.2022 KR 20220171495; 13.04.2023 KR 20230048848; 06.12.2023 KR 20230175274
(71) Applicant: LG Energy Solution, Ltd., Seoul 07335 (KR)
(72) Inventor: HWANG, Soo Ji, Daejeon 34122 (KR); SONG, Dae Woong, Daejeon 34122 (KR); KIM, Sang Hun, Daejeon 34122 (KR); YU, Hyung Kyun, Daejeon 34122 (KR); KANG, Min Hyeong, Daejeon 34122 (KR)
(74) Representative: Plasseraud IP
(86) International application number: PCT/KR2023/020251
(87) International publication number: WO 2024/123150

(57) **Abstract**

The present invention relates to a pouch cell that can prevent the generation of cracks in the bridge portion of a pouch due to gases generated during charging and discharging, and a method for manufacturing the same.

The method for manufacturing a pouch cell comprises (a) a step of molding a pouch film comprising a metal layer so as to form a pair of cup portions capable of accommodating an electrode assembly at both sides of a bridge portion in the pouch film, wherein in step (a), the pouch film may be molded so as to satisfy an equation of T/D>0.006, where a thickness of the metal layer in the bridge portion is T mm, and a depth of the cup portion is D mm after molding.

## Description

### TECHNICAL FIELD

### CROSS-REFERENCE TO RELATED APPLICATIONS

This application claims the benefit of Korean Patent Application Nos. 10-2022-0171495, filed on December 9, 2022, 10-2023-0048848, filed on April 13, 2023, and 10-2023-0175274, filed on December 6, 2023, in the Korean Intellectual Property Office, the contents of which are incorporated herein by reference.

### TECHNICAL FIELD

The present invention relates to a pouch cell and a method for manufacturing the same, and more particularly, to a secondary battery pouch cell capable of charging and discharging and a method for manufacturing the same.

### BACKGROUND ART

Recently, the price of energy sources rises due to depletion of fossil fuels, interest in environmental pollution is growing, and the demand for eco-friendly alternative energy sources is becoming an essential factor for future life. Accordingly, research on various power production technologies such as solar power, wind power and tidal power continues, and there is also great interest in power storage devices such as batteries to use the electrical energy produced in this way more efficiently.

Further, as technology development and demand for electronic mobile devices and electric vehicles using batteries increase, the demand for batteries as an energy source is rapidly increasing, and accordingly, much research is being conducted on batteries that can meet various needs.

Batteries that store electrical energy can be generally divided into primary batteries and secondary batteries. The primary batteries are disposable, consumable batteries, while the secondary batteries are rechargeable batteries manufactured using materials in which the oxidation and reduction processes between current and materials are repeatable. That is, if a reduction reaction is performed on a material by current, the power is charged, and if an oxidation reaction is performed on the material, the power is discharged. As the charging and discharging is repeatedly performed, electricity is generated.

Secondary batteries can be classified according to their shape into cylindrical cells, pouch cells, and prismatic cells. Among them, the pouch cell may include an electrode assembly in which a positive electrode, a negative electrode, a separator and the like are stacked in the pouch.

Generally, a pouch cell can be manufactured in a form in which an electrode assembly is accommodated in the cup portion of a pouch film. In this case, the cup portion can be formed through a process of molding the pouch film.

Meanwhile, in order to increase energy density, a pouch cell may be manufactured in which cup portions of a pouch, accommodating an electrode assembly are formed on both sides of the pouch in the thickness direction. In this type of pouch cell, there was a problem in that cracks occurred in the bridge portion formed between the two cup portions, due to gases generated internally, and damage to the bridge portion occurred. The damage to the bridge portion may be a factor of the pouch cell not exhibiting normal function.

Therefore, there is a need for a pouch cell that can prevent damage to the bridge portion, and a method for manufacturing the same.

### DISCLOSURE OF THE INVENTION

### TECHNICAL PROBLEM

The task of the present invention is to provide a pouch cell having improved safety by preventing the generation of cracks in the bridge portion of a pouch due to gases generated during the charge or discharge of the pouch cell, and a method for manufacturing the same.

### TECHNICAL SOLUTION

A method for manufacturing a pouch cell according to the present invention comprises (a) a step of molding a pouch film comprising a metal layer so as to form a pair of cup portions capable of accommodating an electrode assembly, at both sides of a bridge portion in the pouch film, wherein in step (a), the pouch film may be molded so as to satisfy an equation of T/D>0.006, where a thickness of the metal layer in the bridge portion is T mm, and a depth of the cup portion is D mm after molding.

In step (a), the metal layer may be molded so that the thickness of the metal layer in the bridge portion after molding is at least 0.8 times the thickness of the metal layer prior to molding.

The method for manufacturing a pouch cell may further comprise (b) a step of disposing the electrode assembly in the cup portion and folding the pouch film based on the bridge portion so that the pair of the cup portions cover the electrode assembly, and (c) a step of sealing an outer circumference of the pouch film in a folded state, wherein in step (c), the sealing may be performed so that the shortest straight line distance between a sealed portion and the cup portion becomes 0.5 mm to 1.5 mm.

The method for manufacturing a pouch cell may further comprise (b) a step of disposing the electrode assembly in the cup portion and folding the pouch film based on the bridge portion so that the pair of the cup portions cover the electrode assembly, and (c) a step of sealing an open portion of the pouch film in a folded state, wherein step (c) may comprise (c-1) a step of sealing an outer circumference of the pouch film, and (c-2) a step of forming an additional sealing portion so that a distance to the cup portion becomes 0.5 mm to 1.5 mm.

A method for manufacturing a pouch cell according to the present invention comprises (a) a step of molding a pouch film comprising a metal layer so as to form a pair of cup portions capable of accommodating an electrode assembly, at both sides of a bridge portion in the pouch film, wherein in step (a), the metal layer is molded so that a thickness of the metal layer in the bridge portion decreases by 20% or less.

The metal layer may comprise aluminum (Al).

A pouch cell according to the present invention comprises an electrode assembly, and a pouch comprising a metal layer and having a shape in which both sides are folded based on a bridge portion to cover the electrode assembly, wherein the pouch comprises a cup portion provided with a space accommodating the electrode assembly therein, and an equation of T/D>0.006 is satisfied, where a thickness of the metal layer in the bridge portion is T mm, and a depth of the cup portion is D mm.

The pouch may comprise a sealing portion separately disposed from the cup portion and sealed to block the electrode assembly from the outside, and the shortest distance between the cup portion and the sealing portion may be 0.5 mm to 1.5 mm.

The sealing portion may further comprise an outer sealing portion separately disposed from the cup portion with a certain distance, and an additional sealing portion disposed between the outer sealing portion and the cup portion, wherein a distance between the additional sealing portion and the cup portion is 0.5 mm to 1.5 mm.

In the pouch cell, the bridge portion may be formed at one end of the cup portion, and the additional sealing portion may be disposed so that one end is positioned at the same line as the one end of the cup portion.

The additional sealing portion may have a shape in which a width gradually decreases from the outer sealing portion to the cup portion.

In the pouch, the thickness of the metal layer in the bridge portion may be at least 0.8 times the thickness of the metal layer in the sealing portion.

### ADVANTAGEOUS EFFECTS

The method for manufacturing a pouch cell according to the present invention comprises (a) a step of molding a pouch film comprising a metal layer so as to form a pair of cup portions capable of accommodating an electrode assembly at both sides of a bridge portion, wherein the pouch film is molded in step (a) so as to satisfy an equation of T/D>0.006, where a thickness of the metal layer in the bridge portion is T mm, and a depth of the cup portion is D mm after molding.

Accordingly, the generation of cracks in the bridge portion of the pouch due to gases generated during charging and discharging may be prevented.

In addition, the efficiency of a pouch cell manufacturing process may be improved.

In addition, the safety of the pouch cell may be improved by preventing damage to the bridge portion of the pouch.

The effect according to the present invention is not limited by the contents illustrated above, and further various effects are included in the present specification.

### BRIEF DESCRIPTION OF DRAWINGS

FIG. 1 is a flowchart schematically showing a method for manufacturing a pouch cell according to an embodiment of the present invention.
FIG. 2 is a perspective view schematically showing a pouch cell according to an embodiment of the present invention.
FIG. 3 is a front view schematically showing a crack generation state in a pouch cell according to a comparative embodiment of the present invention.
FIG. 4 is a perspective view schematically showing a pouch film according to an embodiment of the present invention.
FIG. 5 is a plan view, viewed from above, schematically showing a sealing portion of a pouch film according to an embodiment of the present invention.
FIG. 6 is a plan view, viewed from above, schematically showing a sealing portion of a pouch film according to another embodiment of the present invention.
FIG. 7 is a plan view, viewed from above, schematically showing a sealing portion of a pouch film according to another embodiment of the present invention.

### BEST MODE FOR CARRYING OUT THE INVENTION

Hereinafter, preferred embodiments of the present invention will be explained in detail so that a person skilled in the art can easily implement the present invention with reference to the accompanying drawings. However, the present invention can be accomplished in various different forms and is not limited by the embodiments below.

In order to clearly explain the present invention, detailed description on parts unrelated to the explanation or known technologies that may obscure the gist of the present invention have been omitted. In adding reference symbols to components in each drawing in this specification, the same or similar reference symbols are used to designate the same or similar components throughout the specification.

In addition, words or terms used in the present specification and claims shall not be interpreted as the meaning defined in commonly used dictionaries. The words or terms should be interpreted as having a meaning that is consistent with the technical idea of the invention, based on the principle that an inventor may properly define the meaning of the words or terms to best explain the invention.

### Method for Manufacturing Pouch Cell

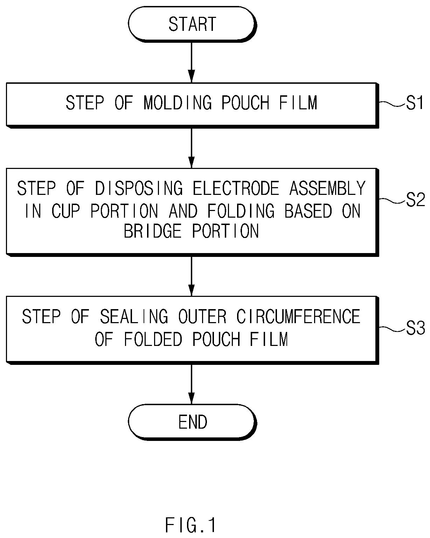

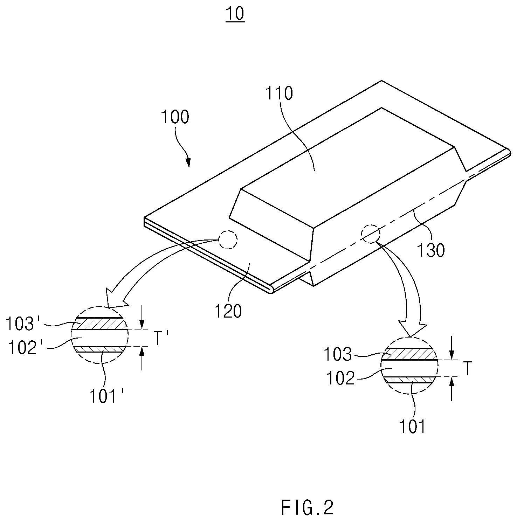

FIG. 1 is a flowchart schematically showing a method for manufacturing a pouch cell according to an embodiment of the present invention, and FIG. 2 is a perspective view schematically showing a pouch cell (10) according to an embodiment of the present invention.

The method for manufacturing a pouch cell according to an embodiment of the present invention may be a method for manufacturing a secondary battery capable of charging and discharging. Particularly, the method for manufacturing a pouch cell may be a method for manufacturing a pouch cell (10) in which an electrode assembly is disposed in a pouch (100).

Referring to FIG. 1, the method for manufacturing a pouch cell according to an embodiment of the present invention may include a step (S1) of molding a pouch film (100-1) so that a pair of cup portions (110) are formed in the pouch film (100-1) including a metal layer (102). Hereinafter, this step is referred to as step (a).

Referring to FIG. 2, in a pouch cell (10) manufactured by the method for manufacturing a pouch cell according to an embodiment of the present invention, an electrode assembly including a negative electrode, a positive electrode and a separator may be disposed in a pouch (100). Here, the pouch

(100) may be disposed with a shape surrounding the electrode assembly. Particularly, the pouch cell (10) may mean a secondary battery in which an electrode assembly including a negative electrode, a positive electrode and a separator is accommodated in the pouch (100) together with an electrolyte.

Meanwhile, the electrode assembly may have a stacked form or a wound jelly-roll form of a negative electrode, a positive electrode or a separator, and the pouch (100) may accommodate the electrode assembly. In addition, the pouch

(100) may include a molded cup portion (110) so as to accommodate the electrode assembly and an electrolyte. In this case, in step (a) of the method for manufacturing a pouch cell according to an embodiment of the present invention, the cup portion (110) may be molded in the pouch film (100-1).

The molded pouch film (100-1) may be a laminated film of multiple layers having different properties from each other. In this case, the pouch film (100-1) may include a metal layer (102).

The pouch film (100-1) including the metal layer (102) may form the cup portion (110) through a pouch molding device or the like. Here, the pouch molding device may have various types. For example, the pouch molding device may include a punch and a die, and the punch may pressurize the pouch film (100-1) put on the die to mold the cup portion (110).

Referring to FIG. 2, the cup portion (110) of the pouch (100) may form a space for accommodating an electrode assembly and an electrolyte therein. Meanwhile, the pouch cell may have various shapes. For example, a pouch cell may be manufactured by combining two pouch films with one molded cup portion so that they face each other, or a pouch cell may be manufactured by a method of folding a pouch film with a pair of molded cup portions to form a space for accommodating an electrode assembly between the pair of the cup portions. The method for manufacturing a pouch cell according to an embodiment of the present invention will be explained referring to the method of folding a pouch film with a pair of molded cup portions to form a space for accommodating an electrode assembly between the pair of the cup portions.

Accordingly, the pouch film (100-1) used in the method for manufacturing a pouch cell according to an embodiment of the present invention may be molded to form a pair of the cup portions (110). In this case, the pair of the cup portions (110) may be formed at both sides of a bridge portion (130). That is, the bridge portion (130) may be provided between the pair of the cup portions (110). By folding the pouch film (100-1), a space for accommodating an electrode assembly may be formed between a pair of the facing cup portions (110) from each other. Here, the pouch film (100-1) may be folded based on the bridge portion (130).

As described above, the bridge portion (130) may be formed between a pair of the cup portions (110). Accordingly, after folding the pouch film (100-1), the bridge portion (130) may be formed at one end of the cup portion (110).

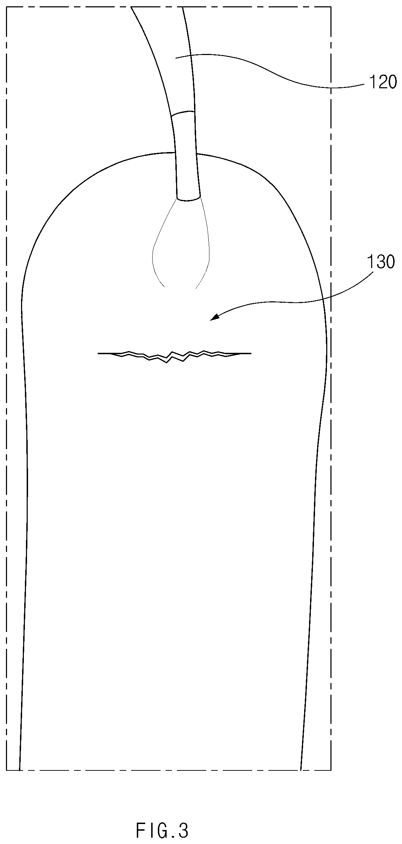

FIG. 3 is a front view schematically showing a crack generation state in a pouch cell according to a comparative embodiment of the present invention.

Referring to FIG. 3, in the conventional pouch cell manufactured by a folding method of a pouch film in which a pair of cup portions was molded, cracks were generated at the part of a folding baseline. Particularly, if folded based on the bridge portion (130), cracks were generated in the bridge portion (130) of the pouch (100). In this regard, in the pouch cell (10), as charging and discharging are repeated, gases may be generated in the pouch (100). Due to the gases in the pouch (100), a pressure may be applied to the pouch (100), and cracks may be generated in the bridge portion (130) which has relatively insufficient rigidity. That is, the pressure in the pouch (100) may increase due to the gases, and cracks may be generated in the bridge portion (130) which is relatively weak to a pressure due to the increased pressure.

In addition, cracks in the bridge portion (130) may be generated during the manufacturing process of the pouch cell (10). For example, the cracks of the bridge portion (130) may be generated due to gases generated in the pouch in an activation process. Besides, the cracks of the bridge portion (130) may be generated during the manufacturing process of the pouch cell (10) by various physical factors.

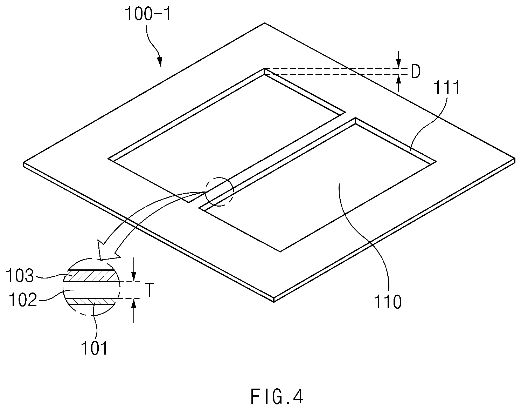

FIG. 4 is a perspective view schematically showing a pouch film (100-1) according to an embodiment of the present invention.

The pouch film (100-1) used in the method for manufacturing a pouch cell according to an embodiment of the present invention may include multiple layers. For example, the pouch film (100-1) may include an inner layer (101), a metal layer (102) and an outer layer (103).

The pouch film (100-1) used for the manufacture of the pouch cell (10) of the present invention will be explained in particular.

Referring to FIG. 4, the pouch film (100-1) may include an inner layer (101), a metal layer (102) and an outer layer (103), and may selectively further include a stretching auxiliary layer.

The inner layer (101) may be formed using a polymer on the innermost side and may be in direct contact with an electrode assembly. Here, the innermost side may mean the last layer from the outer layer (103) toward the electrode assembly.

The polymer forming the inner layer (101) may be composed of one or more materials selected from the group consisting of polyethylene, polypropylene, polycarbonate, polyethylene terephthalate, polyvinyl chloride, an acrylic polymer, polyacrylonitrile, polyimide, polyamide, cellulose, aramid, nylon, polyester, polyparaphenylene benzobisoxazole, polyarylate, Teflon, and a glass fiber. Particularly, polyolefin-based resins such as polypropylene (PP) and polyethylene (PE) are mainly used. Polypropylene (PP) has excellent mechanical properties such as tensile strength, rigidity, surface hardness, abrasion resistance and heat resistance and chemical properties such as corrosion resistance, and is mainly used for the formation of the inner layer (101). Further, the inner layer may be composed of cated polypropylene, acid modified polypropylene or a ternary copolymer of polypropylene-butylene-ethylene. Here, the acid modified polypropylene may be maleic anhydride polypropylene (MAH PP). In addition, the inner layer (101) may have a single layer structure formed of any one material, or a composite layer structure formed by layering two or more materials.

Meanwhile, in the pouch film (100-1) used in the method for manufacturing a pouch cell, the thickness of the inner layer (101) may be 30 µm to 100 µm, preferably, 40 µm to 90 µm, specifically, 50 µm to 85 µm.

The metal layer (102) may secure the mechanical strength of the pouch (100), block the inflow of gases or moisture from the outside of the pouch cell (10) and prevent electrolyte leakage.

The metal layer (102) may include a metal selected from the group consisting of copper (Cu), aluminum (Al), nickel (Ni), iron (Fe), carbon (C), chromium (Cr), manganese (Mn) and an alloy including two or more thereof, without specific limitation. Preferably, the metal layer (102) may include a metal selected from an aluminum alloy and stainless use steel (SUS).

The aluminum alloy and the stainless use steel may secure mechanical strength above a certain level, while being light in weight. In addition, the aluminum alloy and stainless use steel may complement the electrochemical properties by an electrode assembly and an electrolyte and ensure heat dissipation.

The aluminum alloy may include various materials. For example, one or two or more selected from the group consisting of iron (Fe), copper (Cu), chromium (Cr), manganese (Mn), nickel (Ni), magnesium (Mg) and zinc (Zn) may be included.

The metal layer (102) may have a single layer structure or a multilayer structure. For example, the metal layer (102) with a multilayer structure may be composed of an aluminum alloy layer and a stainless use steel layer.

Meanwhile, in the pouch film (100-1) used in the method for manufacturing a pouch cell, the thickness of the metal layer (102) may be 20 µm to 100 µm, preferably, 40 µm to 80 µm, specifically, 50 µm to 70 µm.

The outer layer (103) is formed using a polymer at the outermost side and protects the pouch cell (10) from friction and collision with the outside, while electrically insulating an electrode assembly from the outside. Here, the outermost side may mean the last layer from the inner layer (101) away from an electrode assembly.

The polymer forming the outer layer (103) may be one or more materials selected from the group consisting of polyethylene, polypropylene, polycarbonate, polyethylene terephthalate, polyvinyl chloride, an acrylic polymer, polyacrylonitrile, polyimide, polyamide, cellulose, aramid, nylon, polyester, polyparaphenylene benzobisoxazole, polyarylate, Teflon, and a glass fiber. Particularly, a polymer such as polyethylene terephthalate (PET) having abrasion resistance and heat resistance is preferably used. In addition, the outer layer (103) may have a single layer structure formed of any one material, or a composite layer structure formed by layering two or more materials.

Meanwhile, in the pouch film (100-1) used for in the method for manufacturing a pouch cell, the thickness of the outer layer (103) may be 5 µm to 25 µm, preferably, 6 µm to 20 µm, specifically, 7 µm to 15 µm.

The pouch film (100-1) used for the manufacture of the pouch cell (10) may further include a stretching auxiliary layer disposed between the metal layer (102) and the outer layer (103).

The stretching auxiliary layer may be formed using a polymer and prevent the separation of the metal layer (102) and the outer layer (103) during stretching.

The polymer forming the stretching auxiliary layer may be one or more materials selected from the group consisting of polyethylene, polypropylene, polycarbonate, polyethylene terephthalate, polyvinyl chloride, an acrylic polymer, polyacrylonitrile, polyimide, polyamide, cellulose, aramid, nylon, polyester, polyparaphenylene benzobisoxazole, polyarylate, Teflon, and a glass fiber. Particularly, since a nylon resin is easy to adhere to the polyethylene terephthalate (PET) of the outer layer (103) and has similar behavior during stretching as the aluminum alloy of the metal layer (102), the nylon resin may be mainly used as the polymer for forming the stretching auxiliary layer. In addition, the stretching auxiliary layer may have a single layer structure formed of any one material, or a composite layer structure formed by layering two or more materials.

Meanwhile, in the pouch film (100-1) used in the method for manufacturing a pouch cell, the thickness of the stretching auxiliary layer may be 15 µm to 50 µm, preferably, 25 µm to 45 µm, specifically, 25 µm to 40 µm.

The thickness of the pouch film (100-1) including the inner layer (101), the metal layer (102), the outer layer (103) and the stretching auxiliary layer may be selected in an appropriate range according to the use of the pouch cell. For example, the thickness of the pouch film (100-1) may be 70 µm to 275 µm, 90 µm to 250 µm, 100 µm to 220 µm.

As an example of a method for preventing the generation of cracks in the bridge portion (130), in step (a) in the method for manufacturing a pouch cell according to an embodiment of the present invention, the pouch film may be molded so as to satisfy an equation of T/D>0.006, where the thickness of the metal layer in the bridge portion is T mm, and the depth of the cup portion is D mm after molding.

If a cup portion (110) is molded in the pouch film (100-1), the thicknesses of the molded portion of the cup portions (110) and the bridge portion (130) provided between a pair of the cup portions (110) may decrease. Accordingly, the thicknesses the metal layer (102) of the pouch film (100-1) forming the cup portion (110) and the metal layer (102) of the pouch film (100-1) forming the bridge portion (130) may also decrease. In this regard, in the equation T/D>0.006, T may mean the thickness of the metal layer (102) in the bridge portion (130), thinned after molding.

Referring to FIG. 4, the cup portion (110) may have a depth after molding. In this case, an equation on conditions for preventing cracks generated in the bridge portion (130) of the pouch (100) may be obtained through experiments. Experiments were performed with various molding depths, and the equation may be a relation between the depth (D) of the molded cup portion (110) and the thickness (T) of the metal layer of the bridge portion (130). That is, the relation may become conditions for preventing cracks from occurring in the bridge portion (130) of the pouch (100).

Particular experimental results can be found through Tables 1 and 2 below.

**[Table 1]**

| | Example 1 | Example 2 | Example 3 | Example 4 | Example 5 | Example 6 | Example 7 |
|---|---|---|---|---|---|---|---|
| D (mm) | 4 | 4 | 4 | 5 | 5 | 6 | 6 |
| T (mm) | 0.0352 | 0.0504 | 0.0516 | 0.0322 | 0.0486 | 0.0444 | 0.0432 |
| T/D | 0.0088 | 0.0126 | 0.0129 | 0.00656 | 0.00972 | 0.0074 | 0.0072 |
| Whether cracks occur or not | X | X | X | X | X | X | X |

**[Table 2]**

| | Comparative Example 1 | Comparative Example 2 | Comparative Example 3 | Comparative Example 4 |
|---|---|---|---|---|
| D (mm) | 5.5 | 6 | 7 | 7 |
| T (mm) | 0.0308 | 0.0284 | 0.042 | 0.0414 |
| T/D | 0.0056 | 0.00473 | 0.006 | 0.00591 |
| Whether cracks occur or not | O | O | O | O |

Referring to Table 1, it can be confirmed that if the value of T/D was greater than 0.006, cracks were not generated in the bridge portion (130). On the contrary, referring to Table 2, if the value of T/D was smaller than 0.006, cracks were generated in the bridge portion (130) as the charging and discharging of the pouch cell (10) was repeated. In addition, cracks were also generated if the value of T/D was 0.006. As an example of a method for preventing the generation of cracks in the bridge portion (130), in step (a) in the method for manufacturing a pouch cell according to an embodiment of the present invention, a metal layer may be molded so that the thickness (T) of the metal layer (102) in the bridge portion

(130) after molding may become 0.8 times the thickness of the metal layer prior to molding. That is, the thickness (T) of the metal layer (102) in the bridge portion (130) after molding may be 80% to 100% of the thickness of the metal layer prior to molding.

As described above, the thickness of the metal layer (102) may decrease in the cup portion (110) and the bridge portion (130) during molding the cup portion (110) in the pouch film (100-1). In this case, if the thickness (T) of the metal layer (102) of the bridge portion (130) after molding becomes 80% or more compared to the thickness prior to molding, cracks were not generated in the bridge portion (130) of the pouch cell (10). Here, 80% may be a numerical obtained through repeated experiments.

Meanwhile, in order to prevent the generation of the cracks of the bridge portion (130), in step (a) in the method for manufacturing a pouch cell, the metal layer may be molded so that the thickness of the metal layer (102) of the cup side portion (111) after molding becomes 0.8 times the thickness of the metal layer prior to molding. That is, the thickness of the metal layer (102) of the cup side portion (111) after molding may be 80% to 100% of the thickness of the metal layer prior to molding. Here, the cup side portion (111) may mean a portion surrounding the side surface of the cup portion (110) to form a space provided in the cup portion (110) to accommodate an electrode assembly (see FIG. 4).

Through the process for molding the cup portion (110) in the pouch film (100-1), the thicknesses of the bridge portion (130) and the cup side portion (111) may be changed relatively greatly. In this regard, in the method for manufacturing a pouch cell according to an embodiment of the present invention, the thickness change of the metal layer in the bridge portion (130) and the cup side portion (111) may be set. Through this, the generation of cracks in the bridge portion (130) of the completed pouch cell (10) may be efficiently prevented.

In the method for manufacturing a pouch cell according to an embodiment of the present invention, a step of folding between a pair of cup portions (110) in the pouch film (100-1) (S2) may be further included so that a pair of the cup portions (110) may cover an electrode assembly. Particularly, the pouch film (100-1) may be folded based on the bridge portion (130). In addition, a step of sealing the outer circumference of the pouch film (100-1) in a folded state (S3) may be further included (see FIG. 1). In this case, the outer circumference of the pouch film (100-1) in a folded state may be sealed by heat and pressure. Hereinafter, the step of sealing is referred to as step (c).

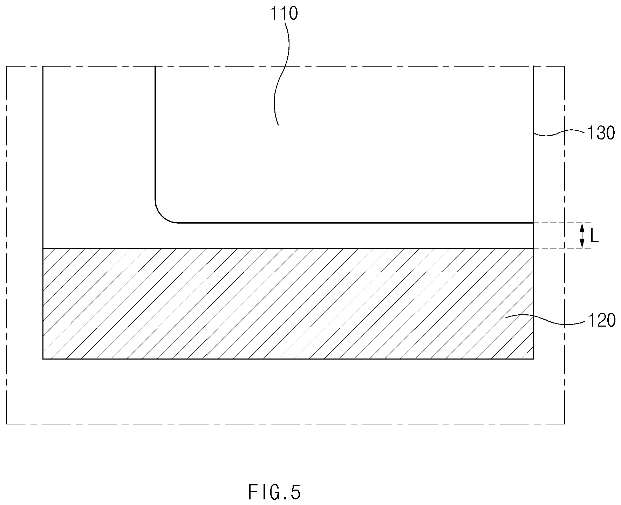

FIG. 5 is a plan view, viewed from above, schematically showing a sealing portion (120) of a pouch cell (10) according to an embodiment of the present invention.

As an example of a method for efficiently preventing the generation of cracks in the bridge portion (130), in step (c) in the method for manufacturing a pouch cell according to an embodiment of the present invention, the sealing may be performed so that the shortest straight line distance (L) between the sealing portion (120) and the cup portion (110) becomes 0.5 mm to 1.5 mm. In this case, the sealing portion (120) may mean a sealed portion.

Meanwhile, the shape of the pouch film (100-1) viewed from above may be a roughly rectangular shape. In this case, if the pouch film (100-1) is folded based on the bridge portion (130), three places may be opened other than the portion where the bridge portion (130) is formed. Particularly, three corners to be sealed through sealing may be present. In step (c), three corners may be sealed so that an electrode assembly accommodated in the cup portion (110) may be sealed from the outside.

In this regard, in step (c), the sealing may be performed so that the shortest straight line distance (L) between the sealing portion (120) and the cup portion (110) becomes 0.5 mm to 1.5 mm. Particularly, when corners formed at both sides of the bridge portion (130) other than the corner formed at the opposite part to the bridge portion (130) with respect to the cup portion (110) among three corners are sealed, the sealing may be performed so that the shortest straight line distance (L) between the sealing portion (120) and the cup portion (110) becomes 0.5 mm to 1.5 mm. Preferably, the sealing may be performed so that the shortest straight line distance (L) between the sealing portion (120) and the cup portion (110) becomes 1 mm or less.

The generation of cracks in the bridge portion (130) may be prevented in the pouch cell (10) which has been sealed such that the shortest straight line distance (L) between the cup portion (110) and the sealing portion (120) is 0.5 mm to 1.5 mm. Here, a numerical value related to the distance may be obtained through repeated experiments.

According to experiments, in the pouch cell (10) in which the distance (L) between the cup portion (110) and the sealing portion (120) is 0.5 mm to 1.5 m, cracks were not generated in the bridge portion (130) even under a relatively high pressure. Accordingly, in the pouch cell (10) according to an embodiment of the present invention, the generation phenomenon of damage such as cracks in the bridge portion (130) may be delayed or prevented.

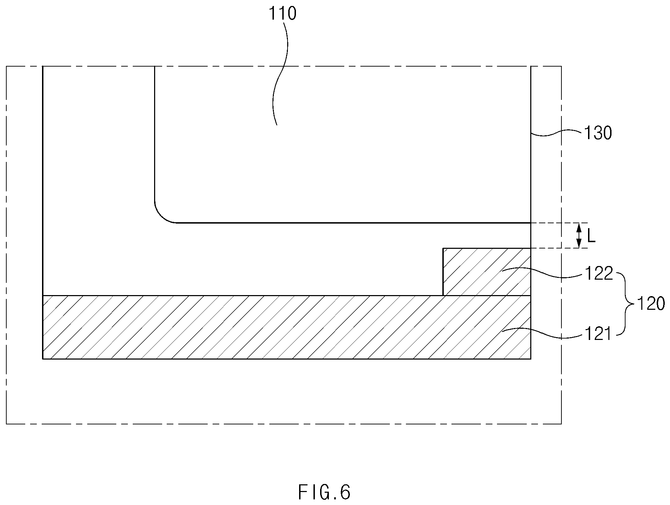

FIG. 6 is a plan view, viewed from above, schematically showing a sealing portion (120) of a pouch cell (10) according to another embodiment of the present invention.

The method for manufacturing a cell pouch according to another embodiment of the present invention may further include a step of folding between a pair of cup portions (110) so that the pair of cup portions (110) may cover an electrode assembly. In addition, a step of sealing by sealing the opened portions of the pouch film (100-1) in a folded state may be further included. Hereinafter, the step of sealing is referred to as step (c).

As an embodiment of a method for efficiently preventing the generation of cracks in a bridge portion (130), step (c) of the method for manufacturing a pouch cell according to another embodiment of the present invention may include step (c-1) and step (c-2). Here, step (c-1) may be a step of sealing the outer circumference of the pouch film (100-1), and step (c-2) may be a step of forming an additional sealing portion (122) having a distance (L) to the folded portion between the pair of cup portions (110) of 0.5 mm to 1.5 mm. In this case, the outer circumference of the pouch film (100-1) may mean the remaining outer sides excluding one end of the sealed cup portion (110) through the folding.

In step (c) of the method for manufacturing a cell pouch, step (c-2) may be performed after performing step (c-1), and step (c-1) and step (c-2) may be performed simultaneously.

Referring to FIG. 6, the sealing portion (120) of the pouch cell (10) manufactured by the method for manufacturing a pouch cell according to another embodiment of the present invention may include an outer sealing portion (121) and an additional sealing portion (122). Here, the outer sealing portion (121) may be separately disposed in a relatively farther position from the cup portion (110) compared to the additional sealing portion (122), and the additional sealing portion (122) may be disposed between the outer sealing portion (121) and the cup portion (110). Through step (c-1), the outer sealing portion (121) may be formed, and through step (c-2), the additional sealing portion (122) may be formed.

According to an experiment, the entire sealing portion (120) is not needed to form a gap of 0.5 mm to 1.5 mm from the cup portion (110). That is, if the distance (L) between the bridge portion (130) where cracks are generated and the sealing portion (120) is 0.5 mm to 1.5 mm, the generation of cracks may be prevented. Accordingly, step (c) in the method for manufacturing a pouch cell according to another embodiment of the present invention may include step (c-2) to reduce a sealing portion while satisfying the conditions.

Referring to FIG. 6, the additional sealing portion (122) may be formed on the same line as the one end of the cup portion (110), where the bridge portion (130) is formed. In addition, the length of the additional sealing portion (122) may be smaller than the length of the outer sealing portion (121). Accordingly, a relatively large space between the outer sealing portion (121) and the cup portion (110) may not be sealed. Since the unsealed space is relatively large, an additional process such as welding an electrode assembly with an electrode lead may be efficiently performed.

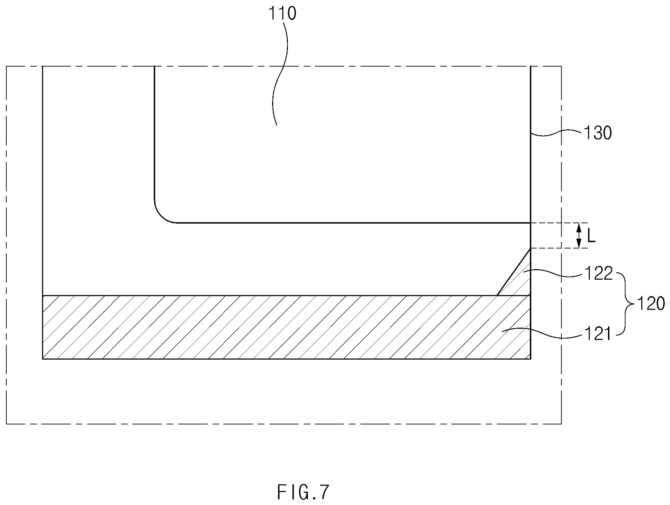

FIG. 7 is a plan view, viewed from above, schematically showing a sealing portion (120) of a pouch cell (10) according to another embodiment of the present invention.

Referring to FIG. 7, according to the method for manufacturing a pouch cell according to another embodiment of the present invention, an additional sealing portion (122) may be manufactured to have a shape in which a width gradually decreases as it gets closer from the outer sealing portion (121) to the cup portion (110).

If the width gradually decreases as the additional sealing portion (122) gets closer from the outer sealing portion (121) to the cup portion (110), the area of an unsealed portion between the outer sealing portion (121) and the cup portion (110) may increase even further. Accordingly, a process using an unsealed portion may be performed more efficiently.

According to the method for manufacturing a pouch cell, the generation of cracks in a bridge portion (130) may delay or prevent though one of the features of the method for manufacturing a pouch cell for preventing the generation of cracks in the bridge portion (130) is included as described above. However, in order to prevent the generation of cracks in the bridge portion (130) more efficiently, the method for manufacturing a pouch cell may include all the features explained above.

### Pouch Cell

The pouch cell (10) according to an embodiment of the present invention may mean a secondary battery capable of charging and discharging and having an electrode assembly disposed in a pouch (100).

In the pouch cell (10) according to an embodiment of the present invention, an electrode assembly including a negative electrode, a positive electrode and a separator may be disposed in the pouch (100) (see FIG. 2). Here, the pouch (100) may be disposed with a shape surrounding the electrode assembly. Particularly, the pouch cell (10) may mean a secondary battery in which an electrode assembly (100) including a negative electrode, a positive electrode and a separator is accommodated together with an electrolyte in the pouch (100).

The pouch cell (10) according to an embodiment of the present invention may include the electrode assembly and the pouch (100). The pouch (100) may include a metal layer (102) and may have a folded shape of both sides based on a bridge portion (130) to cover the electrode assembly. In addition, the pouch (100) may include a cup portion (110) accommodating the electrode assembly.

As an embodiment for preventing the generation of cracks in the bridge portion (130), the pouch (100) of the pouch cell (10) according to an embodiment of the present invention may satisfy an equation T/D>0.006, if the thickness of the metal layer (102) in the bridge portion (130) is T mm, and the depth of the cup portion (110) is D mm.

In this regard, in the pouch cell (10), gases may be generated in the pouch (100) according to the repetition of charging and discharging. By the gases in the pouch (100), a pressure may be applied to the pouch (100), and cracks may be generated in the bridge portion (130) which has relatively weak rigidity. That is, due to the gases, the internal pressure of the pouch (100) may increase, and due to the increased pressure, cracks may be generated in the bridge portion (130) which is relatively weak to a pressure.

The generation of cracks in the bridge portion (130) may be prevented in a pouch cell (10) including a pouch (100) satisfying an equation T/D>0.006, if the thickness of the metal layer (102) in the bridge portion (130) is T mm, and the depth of the cup portion (110) is D mm.

The pouch (100) of the pouch cell (10) may include a cup portion (110) and a sealing portion (120).

As another embodiment for preventing cracks in the bridge portion (130), in the pouch (100) of the pouch cell (10) according to an embodiment of the present invention, the thickness (T) of the metal layer (102) of the bridge portion (130) may be at least 0.8 times the thickness (T') of the metal layer (120') of the sealing portion (120).

In this regard, the thicknesses of multiple layers constituting the pouch (100) through the manufacturing process of the pouch cell (100) may be changed. In addition, the thicknesses of the layers may change depending on the portion of the pouch (100). For example, each thickness of the inner layer (101), the metal layer (102) and the outer layer (103) of the bridge portion (130), and each thickness of the inner layer (101'), the metal layer (102') and the outer layer (103') of the sealing portion (120) may be different.

The bridge portion (130) is formed between a pair of cup portions (110) and may be influenced by the molding of the cup portions (110) during the manufacturing process of the pouch (100). On the contrary, the sealing portion (120) may not be influenced by molding during the manufacturing process of the pouch (100). Accordingly, the thickness of the metal layer (102) of the bridge portion (130) may be changed during the manufacturing process, and the thickness of the metal layer (102') of the sealing portion (120) may be hardly changed during the manufacturing process. In this case, a thickness difference may occur between the metal layer (102) of the bridge portion (130) and the metal layer (102') of the sealing portion (120).

According to the results obtained through repeated experiments, if the thickness (T) of the metal layer (102) of the bridge portion (130) is at least 0.8 times the thickness (T') of the metal layer (102') of the sealing portion (120), cracks may not be generated in the bridge portion (130) of the pouch (100). That is, the thickness (T) of the metal layer (102) of the bridge portion (130) where cracks are not generated in the bridge portion (130) of the pouch (100) may be 80% to 100% of the thickness (T') of the metal layer (102') of the sealing portion (120). As an embodiment of an additional configuration to efficiently prevent the generation of cracks in the bridge portion (130), the shortest distance (L) between the cup portion (110) and the sealing portion (120) may be 0.5 mm to 1.5 mm in the pouch (100) of the pouch cell (10) according to an embodiment of the present invention. Preferably, in the pouch (100) of the pouch cell (10), the shortest distance (L) between the cup portion (110) and the sealing portion (120) may be 1.0 mm or less. This numerical value may be a numerical value obtained through experiments.

If the sealing portion (120) and the cup portion (110) of the pouch (100) are separately formed by 0.5 mm to 1.5 mm, the generation of cracks in the bridge portion (130) due to a pressure by the internal gas of the pouch (100) may be prevented. In addition, though a greater pressure is applied to the pouch (100), the damage of the bridge portion (130) may be delayed or prevented.

FIG. 6 is a plan view, viewed from above, schematically showing a sealing portion (120) of a pouch cell (10) according to another embodiment of the present invention.

Referring to FIG. 6, the sealing portion (120) of the pouch (100) according to another embodiment of the present invention may include an outer sealing portion (121) and an additional sealing portion (122). Particularly, the outer sealing portion (121) of the sealing portion (120) may be separately disposed with a certain distance from the cup portion (110), and the additional sealing portion (122) may be disposed between the outer sealing portion (121) and the cup portion (110). That is, the outer sealing portion (121) may be separately disposed relatively further than the additional sealing portion (122) from the cup portion (110).

In this case, as an embodiment of a configuration for efficiently preventing the generation of cracks in the bridge portion (130), a distance (L) between the additional sealing portion (122) and the cup portion (110) may be 0.5 mm to 1.5 mm in the pouch cell (10) according to another embodiment of the present invention.

An unsealed space between the cup portion (110) and the sealing portion (120) in the pouch cell (10) according to another embodiment of the present invention may be larger compared to the pouch cell (10) according to an embodiment of the present invention. Accordingly, the generation of cracks in the bridge portion (130) may be prevented, and at the same time, a process may be more efficiently performed when performing a process including welding an electrode assembly and an electrode lead.

Meanwhile, the bridge portion (130) of the pouch (100) may be formed at one end of the cup portion (110). Here, the one end of the cup portion (110) may mean the right end of the cup portion (110) based on FIG. 6.

In the pouch cell (10) according to another embodiment of the present invention, the additional sealing portion (122) may be disposed on the same line as the one end of the cup portion (110). That is, the additional sealing portion (1220 may be disposed to contact the one end of the outer sealing portion (121). In this case, even a larger space may be formed between a portion of the outer sealing portion (121) not contact the additional sealing portion (122) and the cup portion (110), and another process utilizing the space may be more efficiently performed.

FIG. 7 is a plan view, viewed from above, schematically showing a sealing portion (120) of a pouch cell (10) according to another embodiment of the present invention.

Referring to FIG. 7, the additional sealing portion (122) according to another embodiment of the present invention may have a shape in which a width gradually decreases as it gets closer to the cup portion (110) from the outer sealing portion (121). In this case, the decreasing degree of the width may be diverse, and the shape of the additional sealing portion (122) may be diverse.

If the additional sealing portion (122) has a shape in which a width gradually decreases as it gets closer to the cup portion (110) from the outer sealing portion (121), a wider unsealed portion may be formed between the cup portion (110) and the outer sealing portion (121). Accordingly, the efficiency of the unsealed portion may be improved even further.

Although the present invention has been described above with limited examples and drawings, the present invention is not limited thereto, and various implementations are possible within the technical idea of the present invention and the equivalent range of the claims attached hereinafter by a person skilled in the art in the technical field to which the present invention belongs.

### [Explanation of Symbols]

10: Pouch cell
100: Pouch
100-1: Pouch film
101-1: Inner layer
102: Metal layer
103: Outer layer
110: Cup portion
111: Cup side portion
120: Sealing portion
121: Outer sealing portion
122: Additional sealing portion
130: Bridge portion

## Claims

1. A method for manufacturing a pouch cell, the method comprising:
(a) a step of molding a pouch film comprising a metal layer so as to form a pair of cup portions capable of accommodating an electrode assembly, at both sides of a bridge portion in the pouch film,
wherein in step (a), the pouch film is molded so as to satisfy an equation of T/D>0.006, where a thickness of the metal layer in the bridge portion is T mm, and a depth of the cup portion is D mm after molding.

2. The method for manufacturing a pouch cell according to claim 1, wherein in step (a), the metal layer is molded so that the thickness of the metal layer in the bridge portion after molding is at least 0.8 times the thickness of the metal layer prior to molding.

3. The method for manufacturing a pouch cell according to claim 1, further comprising:
(b) a step of disposing the electrode assembly in the cup portion and folding the pouch film based on the bridge portion so that the pair of the cup portions cover the electrode assembly; and
(c) a step of sealing an outer circumference of the pouch film in a folded state,
wherein in step (c), the sealing is performed so that the shortest straight line distance between a sealed portion and the cup portion becomes 0.5 mm to 1.5 mm.

4. The method for manufacturing a pouch cell according to claim 1, further comprising:
(b) a step of disposing the electrode assembly in the cup portion and folding the pouch film based on the bridge portion so that the pair of the cup portions cover the electrode assembly; and
(c) a step of sealing an open portion of the pouch film in a folded state, wherein step (c) comprises:
(c-1) a step of sealing an outer circumference of the pouch film; and
(c-2) a step of forming an additional sealing portion so that a distance to the cup portion becomes 0.5 mm to 1.5 mm.

5. A method for manufacturing a pouch cell, the method comprising:
(a) a step of molding a pouch film comprising a metal layer so as to form a pair of cup portions capable of accommodating an electrode assembly, at both sides of a bridge portion in the pouch film,
wherein in step (a), the metal layer is molded so that a thickness of the metal layer in the bridge portion decreases by 20% or less.

6. The method for manufacturing a pouch cell according to claim 5, wherein the metal layer comprises aluminum (Al).

7. A pouch cell comprising:
an electrode assembly; and
a pouch comprising a metal layer and having a shape in which both sides are folded based on a bridge portion to cover the electrode assembly,
wherein the pouch comprises a cup portion provided with a space accommodating the electrode assembly therein, and
an equation of T/D>0.006 is satisfied, where a thickness of the metal layer in the bridge portion is T mm, and a depth of the cup portion is D mm.

8. The pouch cell according to claim 7, wherein the pouch comprises a sealing portion separately disposed from the cup portion and sealed to block the electrode assembly from the outside, and
the shortest distance between the cup portion and the sealing portion is 0.5 mm to 1.5 mm.

9. The pouch cell according to claim 8, wherein the sealing portion further comprises:
an outer sealing portion separately disposed from the cup portion with a certain distance; and
an additional sealing portion disposed between the outer sealing portion and the cup portion,
wherein a distance between the additional sealing portion and the cup portion is 0.5 mm to 1.5 mm.

10. The pouch cell according to claim 9, wherein the bridge portion is formed at one end of the cup portion, and
the additional sealing portion is disposed so that one end is positioned at the same line as the one end of the cup portion.

11. The pouch cell according to claim 9, wherein the additional sealing portion has a shape in which a width gradually decreases from the outer sealing portion to the cup portion.

12. The pouch cell according to claim 8, wherein the thickness of the metal layer in the bridge portion is at least 0.8 times the thickness of the metal layer in the sealing portion, in the pouch.
